# EUROPEAN PATENT APPLICATION

(11) **EP 2 889 474 A1**
(43) Date of publication of application: **01.07.2015**
(21) Application number: 13199792.6
(22) Date of filing: 30.12.2013
(51) Int. Cl.: F03D 11/00, F03D 11/04, F03D 1/00, E04H 12/08

(54) **Flange connection for direct driven wind turbine**

(71) Applicant: Siemens Aktiengesellschaft, 80333 München (DE)
(72) Inventor: Kumar, Shravan, 7330 Brande (DK); Kosuri, Srinivas Ratna, 7330 Brande (DK)

(57) **Abstract**

The invention relates to a flange connection for a direct driven wind turbine.

A flange connection (1) of a wind turbine, to connect a first tubular part (2) of a wind turbine to a second tubular part (3) of a wind turbine, comprises a first flange (4) that is connected to the first tubular part (2) of the wind turbine and a second flange (5) that is connected to the second tubular part (3) of the wind turbine.

The first flange (4) and the second flange (5) comprise a plurality of holes (6) that correspond to each other and that are prepared to be used by connection means when the first flange (2) and the second flange (3) are connected to a flange connection (1).

The first flange (4) is connected to the first tubular part (2) of the wind turbine in an inward-looking manner and a second flange (5) is connected to the second tubular part (3) of the wind turbine in an outward-looking manner.

The connection between the first flange (4) and the first tubular part (2) of the wind turbine, and the connection between the second flange (5) in the second tubular part (3) of the wind turbine, are arranged at different sides of the plurality of holes (6), when the first flange (4) and the second flange (5) are connected to form the flange connection (1).

## Description

The invention relates to a flange connection for a direct driven wind turbine.

A wind turbine comprises a tower, a nacelle and a rotor. The wind interacts with the rotor of the wind turbine and rotates the rotor.

In a direct driven wind turbine the rotation of the rotor is directly transferred to the electric generator, which is a part of the nacelle. The rotation is not transferred by a gear to another rotational speed.

The rotor of the wind turbine is connected to the rotor of the electric generator. The stator of the electric generator is connected to a support structure of the nacelle. The support structure is connected to the tower of the wind turbine.

Vibrations, axial loads, radial loads, and tilting moments are induced into the rotor of the wind turbine due to the wind. The loads and vibrations are transferred from the rotor of the wind turbine into the generator, to the support structure, and into the tower.

The connection between the generator and the support structure needs to be rigid enough to carry the weight of the generator and the rotor of the wind turbine. In addition, the connection needs to transfer vibrations, axial loads, radial loads, and tilting moments.

The weight of the generator and the rotor of the wind turbine, the vibrations, axial loads, radial loads, and tilting moments add up to forces that are acting on the connection between the electric generator and the support structure. The connection between the stator of the electric generator and the support structure of the nacelle is a flange connection. The flange connection comprises a first flange at the stator of the generator and a second flange at the support structure that are connected to each other by connection means. The flange connection needs to be rigid enough to be able to transfer the forces acting on the connection.

Several aspects are important to influence the stability of the flange connection and the capability to transfer forces. The two flanges comprise a certain surface area where they are in contact to each other. The two flanges show a certain thickness of the material. The two flanges comprise a number of holes that are used to connect the flanges to each other by connection means, like bolts. The bolts show a certain thickness and strength.

Over the past years the design of direct driven wind turbines was increased into the range of multi-megawatt in power. With a higher power of the wind turbine, more forces need to be transferred over the flange connection.

To improve the stability of the flange connection and the capability to transfer forces, the flange connection was build bigger in diameter. The flanges were increased in contact area and in thickness. In addition, a higher number of connection means is used to connect the flanges.

This shows the disadvantage that the flange connection comprises more mass. Thus more material is needed. In addition, the weight of the flange connection is increased. Thus the stability of the support structure and the tower need to be increased. Thus even more material is needed for the tower. Thus, with increasing the stability of the flange connection, the wind turbine gets heavier and more expensive.

The aim of the invention is therefore to provide an improved flange connection.

The object of the invention is achieved by the independent claim 1. Further features of the invention are disclosed in the dependant claims.

A flange connection of a wind turbine, to connect a first tubular part of a wind turbine to a second tubular part of a wind turbine, comprises a first flange that is connected to the first tubular part of the wind turbine and a second flange that is connected to the second tubular part of the wind turbine.

The first flange and the second flange comprise a plurality of holes that correspond to each other and that are prepared to be used by connection means when the first flange and the second flange are connected to a flange connection.

The first flange is connected to the first tubular part of the wind turbine in an inward-looking manner and a second flange is connected to the second tubular part of the wind turbine in an outward-looking manner.

The connection between the first flange and the first tubular part of the wind turbine, and the connection between the second flange in the second tubular part of the wind turbine, are arranged at different sides of the plurality of holes, when the first flange and the second flange are connected to form the flange connection.

A first tubular part of a wind turbine comprises a first flange. The first flange is protruding from the surface of the tubular part especially at the end of the tubular part. The flange comprises a connection to the tubular part and comprises a connection area to connect to a second flange part.

The connection between a first flange and a second flange forms a flange connection.

The first flange and the second flange are connected by the use of connection means. The connection means can be bolts or rivets. The bolts or rivets are arranged through holes in the first flange and in the second flange, to produce a certain pressure between the first flange and the second flange to develop a strong flange connection.

Thus, the first flange and the second flange comprise a plurality of holes that correspond to each other and that are prepared to be used by connection means like bolts or rivets.

The tubular part defines a space within the tubular part and a space surrounding the tubular part, whereby the space within the tubular part is the space between the walls of the tubular part.

The first flange is connected to the first tubular part of the wind turbine in an inward-looking manner. A flange is connected to a tubular part in an inward-looking manner when the flange reaches towards the space within the tubular part.

The tubular part defines a middle axis, that can also be the longitudinal axis, whereby the middle axis is located between the outer walls of the tubular part.

A flange is connected to a tubular part in an inward-looking manner when the flange reaches from the connection to the tubular part towards the middle axis of the tubular part.

The second flange is connected to the second tubular part of the wind turbine in an outward-looking manner. A flange is connected to a tubular part in an outward-looking manner when the flange reaches from a connection to the tubular part towards the space around the tubular part or away from the middle axis of the tubular part.

The first flange and a second flange are connected to form the flange connection. The connection areas of the first flange and a second flange are arranged in contact to each other. Connection means are introduced into the corresponding holes of the first flange and the second flange to tighten the flange connection.

The connection between the first flange and the first tubular part of the wind turbine and the connection between the second flange and the second tubular part of the wind turbine are then arranged at different sides of the plurality of holes where the first flange and the second flange are connected to form the flange connection.

Forces are transferred over the flange connection. This can be axial forces, rotational forces or tilting moments. Axial forces and tilting moments can lead to forces that try to pull the two tubular parts of the wind turbine away from each other.

In a flange connection as described, the forces that pull the first tubular part and the second tubular part away from each other, act on different sides of the plurality of holes of the flange connection. Thus the forces act on different sides of the flange connection.

With increasing forces pulling at the flange connection, the flanges will start to bend in the area where they are connected to the tubular parts. Thus the flange connection will not be pulled apart. The contact areas of the first flange and the second flange stay in contact to each other and the stress in the connection means and in the holes is reduced.

Thus the flange connection can transfer higher loads and forces without experiencing fatigue or damages to the material of the flanges or the connection means.

Thus, the lifetime of the flange connection is increased. Thus, the costs of maintenance and service are reduced and in the case of a wind turbine the costs per energy are reduced.

The distance between the axis and the wall of at least a part of the first tubular part decreases with an increasing distance from the first flange so that the wall of the first tubular part at least partially comprises a mainly conical shape.

In a certain distance from the flange connection, the first tubular part and the second tubular part comprise mainly the same distance between the axis of the tubular parts and a wall of the tubular parts. The axis of the tubular part can be the middle axis or the longitudinal axis of the tubular part of the wind turbine.

In the area of the flange connection, the distance between the axis and the wall of the first tubular part or the axis and the wall of the second tubular part show a certain difference resulting from the width of the flange connection.

With an increasing distance from the first flange, the distance between the axis of the first tubular part and the wall of the first tubular part is decreasing until the distance between the middle axis and the wall of the first tubular part reaches a certain value.

The section of the tubular part, where the distance between the middle axis and the wall of the tubular part is decreasing, forms a transition area between a tubular part of a certain size and the flange connection. Thus, tubular parts with a certain size can be connected by the flange connection as described.

The distance between the axis and the wall of at least a part of the second tubular part increases with an increasing distance from the second flange so that the wall of the second tubular part at least partially comprises a mainly conical shape.

At the flange connection, the first tubular part and the second tubular part show different values in the distance between the middle axis and their respective walls. With an increasing distance from the flange connection, the distance between the middle axis and the wall of the second tubular part is increasing.

Thus, the difference in the size of the first tubular part and the second tubular part is leveled out. Thus, a first tubular part of a certain size and a second tubular part of a certain size can be connected over the flange connection as described.

The wall of the first tubular part and/or of the second tubular part comprises an S-shaped form seen in a cut through the wall section of the tubular part, whereby the cut is performed in a right angle to the plane of the flange connection.

The distance between the middle axis of the first tubular part in the wall of the first tubular part is decreasing with an increasing distance from the flange connection. Seen in a cut through the first tubular part along the middle axis, the wall section of the first tubular part shows an S-shaped form. The cut through the first tubular part is performed mainly along the middle axis or in a right angle in respect to the plane of the flange connection.

The plane of the flange connection is defined by their contact area of the first and the second flange where the first and the second flange are connected. The distance between the middle axis of the second tubular part and the wall of the second tubular part increases with an increasing distance from the flange connection.

Seen in a cut through the wall of the second tubular part, the wall of the second tubular part shows an S-shaped form. The cut through the wall of the second tubular part is performed along the direction of the middle axis or in a right angle to the plane of the flange connection.

Comprising an S-shaped form in the defined cut, the first tubular part and/or the second tubular part may comprise different sizes and can still be connected with the flange connection described.

In addition, the first tubular part and/or the second tubular part show a higher flexibility and can bend more easily. Thus, the loads and forces, resulting from bending moments or axial forces transferred over the flange connection, do not result in a high stress in the connection means and the holes of the first and the second flange.

The distance between the middle axis of the first tubular part and the wall of the fist tubular part decreases continuously, at least along a part of the wall of the first tubular part, with an increasing distance from the first flange.

Thus, a first tubular part with a certain diameter can be connected to a second tubular part with a different diameter using the flange connection described.

The distance between the middle axis of the first tubular part and the wall of the first tubular part decreases continuously.

Thus, the wall of the first tubular part shows a mainly conical shape. The distance decreases at least along a part of the wall of the first tubular part with an increasing distance from the first flange. Thus the distance decreases until it reaches a certain predetermined distance between the middle axis of the first tubular part and the wall of the first tubular part. For an even more increasing distance from the first flange the distance between the middle axis of the first tubular part and the wall of the first tubular part can then stay constant.

Thus, the flange of the first tubular part can be connected to a first tubular part with a distance, between the middle axis and the wall of the first tubular part, that is different from the radius of the flange.

The distance between the middle axis of the second tubular part and the wall of the second tubular part increases continuously at least along a part of the wall of the second tubular part with an increasing distance from the second flange.

Thus, the second flange can be connected to a tubular part with a different distance between the middle axis of the second tubular part and the wall of the second tubular part, then the radius of the second flange.

The distance increases at least along a part of the wall of the second tubular part with an increasing distance from the second flange. Thus, the distance between the middle axis of the second tubular part in the wall of the second tubular part can be increased until it reaches a certain predetermined distance that can then be kept constant for an even more increasing distance from the second flange.

In the area of the second tubular part, where the distance between the middle axis and the wall is increasing continuously, the wall of the second tubular part shows a conical shape.

The first tubular part is connected to a support structure of a wind turbine and a second tubular part is connected to an electric generator of a wind turbine.

A direct driven wind turbine comprises a rotor, a generator, a nacelle, and a tower. The rotor of the wind turbine is connected to the rotor of the electrical generator. The stator of the electrical generator is connected to a support structure within the nacelle of the wind turbine. The wind interacts with the rotor blades of the rotor of the wind turbine and rotates the rotor.

Thus, the rotor of the electrical generator is rotated together with the rotor of the wind turbine.

In addition, the wind induces loads and vibrations into the rotor of the wind turbine. The loads and vibrations are transferred over the generator of the wind turbine to the support structure.

Thus, the connection between the generator of the wind turbine and the support structure experiences loads and vibrations in the form of axial forces, radial forces and tilting moments.

The flange connection between the electrical generator and the support structure of the wind turbine is a flange connection as described.

Thus, the radial forces, the axial forces and the tilting moments are transferred over the flange connection between the electrical generator and the support structure of the wind turbine.

The flange connection as described, provides a better and more equal distribution of the loads in the flange connection. Thus, the flange connection is less subject to peaks with high loads and thus less subject to fatigue.

Thus, the flange connection between the generator and the support structure of the wind turbine shows an increased lifetime and the necessity for service and repair is reduced. The lifetime of the wind turbine is increased and thus, the cost of energy is reduced.

The second tubular part is connected to the shaft of the generator.

The generator comprises a rotor and a stator. The rotor is connected to the stator rotatable in respect to the stator around a common middle axis of the stator and the rotor of the electrical generator.

The generator comprises a shaft and the shaft is connected to the support structure of the wind turbine with a flange connection as described.

The generator can be an outer rotor generator for example. Thus, the rotor is rotating around the stator of the generator. The stator of the generator is connected to a stationary shaft of the generator. The stationary shaft is connected via a flange connection to the support structure of the wind turbine.

The flange connection is a circular flange connection and the first flange is connected to the first tubular part oriented radial inwardly and a second flange is connected to the second tubular part oriented radial outwardly.

The flange connection is a circular flange connection, thus the first flange and the second flange are formed circular. The circular flange connection shows an axis of rotation. A radial direction is defined from the axis of rotation outwardly in a right angle from the axis of rotation.

The first flange is connected to the first tubular part, whereby the first flange is pointing inwardly in a radial direction seen from the wall of the first tubular part.

Thus, seen in a cut along the axis of rotation, the first tubular part and the first flange show an L-shaped form, whereby the short leg of the L is built by the first flange and is pointing towards the axis of rotation of the flange.

The second flange is connected to the second tubular part and is oriented radial outwardly in respect to the wall of the second tubular part. Seen in a cut through the wall of the second tubular part in the second flange, whereby the cut is going along the axis of rotation of the second tubular flange, the wall of the second tubular part and the second flange show an L-shaped form. The short leg of the L is pointing away from the axis of rotation of the flange connection.

The first flange and a second flange show a circle of holes. Connection means which are arranged through the holes to connect the first flange to the second flange. The connection between the first tubular part and the first flange and the connection between the second tubular part and the second flange are arranged on different sides of the holes of the first flange and the second flange. Thus, the connections are located at different radial distances from the axis of rotation.

The first flange comprises a certain thickness and the second flange comprises a certain thickness and that the thickness of the first flange is lower than the thickness of the second flange.

Thus, the first flange and the second flange show different properties for stiffness. Thus, the first flange and the second flange react in a different way as a response to loads and vibrations.

A wind turbine comprises a flange connection as described.

The wind turbine is a direct driven wind turbine.

The invention is shown in more detail by the help of figures. The figures show a preferred configuration and do not limit the scope of the invention.
FIG 1 shows a flange connection.
FIG 2 shows a second embodiment of the flange connection.
FIG 3 shows a flange connection of the prior art.

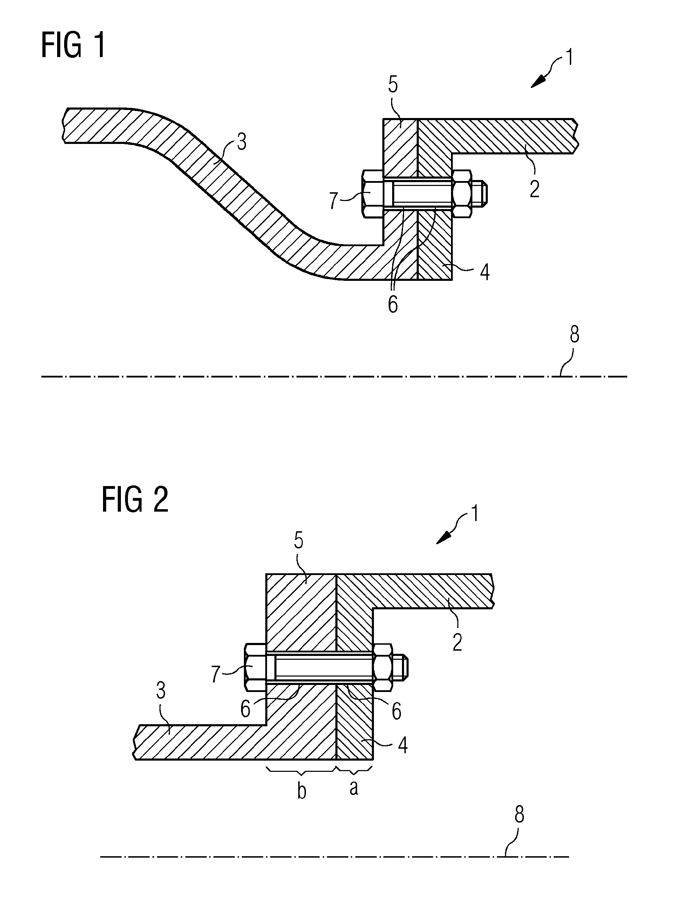

FIG 1 shows a flange connection 1 to connect a first tubular part 2 and a second tubular part 3.

FIG 1 shows a half of the cut through the flange connection 1. The middle axis 8 of the flange connection 1 is shown in FIG 1.

A first tubular part 2 comprises a first flange 4. A second tubular part 3 comprises a second flange 5. The flanges 4 and 5 comprise a hole 6. The holes 6 correspond to each other in a way that the flanges 4 and 5 can be connected by connection means 7 through the holes 6.

The first flange 4 is connected to the first tubular part 2, whereby the first flange 4 is oriented towards the middle axis 8 of the flange connection.

The second tubular part 3 comprises a second flange 5, whereby the second flange is oriented outwardly and is thus pointing away from the middle axis 8 of the flange connection 1.

The distance between the second tubular part 3 and the middle axis 8 is increasing with an increasing distance from the second flange 5 along the tubular part 3.

The distance between the second tubular part 3 and the middle axis 8 increases until the distance reaches the same value as the distance between the middle axis 8 and the first tubular part 2.

In the cut through the flange connection 1 along the middle axis 8, the second tubular part 3 shows an S-shaped form.

Seen as a three-dimensional object, the second tubular part 3 shows the form of a bottleneck. The connection between the first tubular part 2 to the first flange 4 and the second tubular part 3 to the second flange 5 are located at different sides of the connection means 7 or at different sides of the holes 6.

FIG 2 shows a second embodiment of the flange connection.

FIG 2 shows a second embodiment of the flange connection 1. A first tubular part 2 is connected to a first flange 4 and a second tubular part 3 is connected to a second flange 5. The first flange 4 and the second flange 5 comprise a hole 6 to be used by connection means 7 to connect the first flange to the second flange.

The first flange 4 comprises a certain predetermined thickness "a" and a second flange 5 comprises a certain predetermined thickness "b". The thickness "a" of the first flange 4 is thinner than the thickness "b" of the second flange 5.

A middle axis 8 of the flange connection 1 and the first and the second tubular parts 2 and 3 is shown in figure 2.

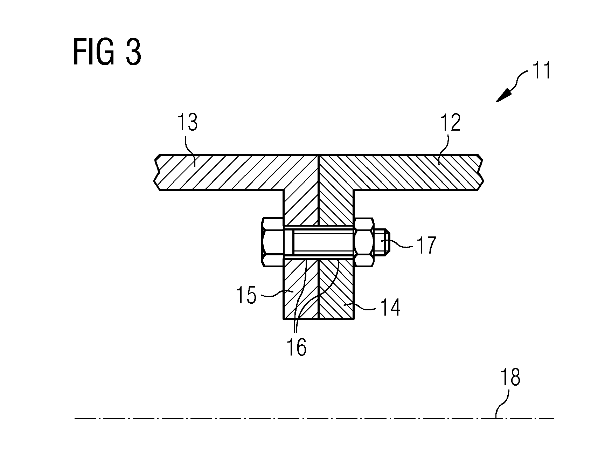

FIG 3 shows a flange connection of the prior art.

FIG 3 shows a flange connection 11 of the prior art. A first tubular part 12 is connected to a first flange 14 and a second tubular part 13 is connected to a second flange 15.

The flanges 14 and 15 comprise a hole 16. The holes 16 correspond to each other to be used by connection mean 17 to connect the first flange 14 to the second flange 15. A middle axis 18 of the flange connection and the first tubular part 12 and the second tubular part 13 is shown in FIG 3.

The illustration in the drawings is in schematic form. It is noted that in different figures, similar or identical elements are provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Flange connection (1) of a wind turbine, to connect a first tubular part (2) of a wind turbine to a second tubular part (3) of a wind turbine, comprising
- a first flange (4) that is connected to the first tubular part (2) of a wind turbine,
- a second flange (5) that is connected to the second tubular part (3) of the wind turbine,
- whereby the first flange (4) and the second flange (5) comprise a plurality of holes (6) that correspond to each other and that are prepared to be used by connection means when the first flange (4) and the second flange (5) are connected to a flange connection (1), **Characterized in that**
- the first flange (4) is connected to the first tubular part (2) of the wind turbine in an inward-looking manner, and
- the second flange (5) is connected to the second tubular part (3) of the wind turbine in an outward-looking manner,
- so that the connection between the first flange (4) and the first tubular part (2) of the wind turbine and the connection between the second flange (5) and the second tubular part (3) of the wind turbine are arranged at different sides of the plurality of holes (6) when the first flange (4) and the second flange (5) are connected to form the flange connection (1).

2. Flange connection (1) according to claim 1, **characterized in that** the distance between the axis and the wall of at least a part of the first tubular part (2) decreases with an increasing distance from the first flange (4), so that the wall of the first tubular part (2) at least partially comprises a mainly conical shape.

3. Flange connection (1) according to claim 1 or claim 2, **characterized in that** the distance between the axis and the wall of at least a part of the second tubular part (3) increases with an increasing distance from the second flange (5), so that the wall of the second tubular part (3) at least partially comprises a mainly conical shape.

4. Flange connection (1) according to claim 2 or claim 3, **characterized in that** the wall of the first tubular part (2) and/or of the second tubular part (3) comprises an s-shaped form seen in a cut through the wall section of the tubular part, whereby the cut is performed in a right angle to the plane of the flange connection (1).

5. Flange connection (1) according to one of the claim 2, **characterized in that** the distance between the axis and the wall of the first tubular part (2) decreases continuously, at least along a part of the wall of the first tubular part (2), with an increasing distance from the first flange (4).

6. Flange connection (1) according to one of the claim 3, **characterized in that** the distance between the axis and the wall of the second tubular part (3) increases continuously, at least along a part of the wall of the second tubular part (3), with an increasing distance from the second flange (5).

7. Flange connection (1) according to one of the preceding claims, **characterized in that** the first tubular part (2) is connected to a support structure of a wind turbine and the second tubular part (3) is connected to an electric generator of the wind turbine.

8. Flange connection (1) according to claim 7, **characterized in that** the second tubular part (3) is connected to the shaft of the generator.

9. Flange connection (1) according to one of the preceding claims, **characterized in that** the flange connection (1) is a circular flange connection, and the first flange (4) is connected to the first tubular part (2) oriented radial inwardly and the second flange (5) is connected to the second tubular part (3) oriented radial outwardly.

10. Flange connection (1) according to one of the preceding claims, **characterized in that** the first flange (4) comprises a certain thickness (a) and the second flange (5) comprise a certain thickness (b), and that the thickness (a) of the first flange (4) lower than the thickness (b) of the second flange (5).

11. Wind turbine comprising a flange connection (1) according to one of the preceding claims.

12. Wind turbine according to claim 10, **characterized in that** the wind turbine is a direct driven wind turbine.
